# EUROPEAN PATENT SPECIFICATION

(11) **EP 3 539 701 B1**
(45) Date of publication and mention of the grant of the patent: **28.06.2023**
(21) Application number: 18174847.6
(22) Date of filing: 29.05.2018
(51) Int. Cl.: B23B 31/11, B23B 31/00, B23C 5/10

(54) **POSITIONING ASSEMBLING STRUCTURE OF CENTER OF MACHINE TOOL**
POSITIONIERUNGSMONTAGESTRUKTUR EINES ZENTRUMS EINER WERKZEUGMASCHINE
STRUCTURE D'ASSEMBLAGE DE POSITIONNEMENT DE CENTRE DE MACHINE-OUTIL

(30) Priority: 15.03.2018 TW 107108823
(43) Date of publication of application: 18.09.2019
(73) Proprietor: Yih Troun Enterprise Co., Ltd., New Taipei City (TW)
(72) Inventor: CHEN, Li-Cheng, New Taipei City (TW)
(74) Representative: Pallini Gervasi, Diego

(56) References cited:
- CN-A- 107 457 440
- DE-A1-102010 015 934
- US-A- 5 163 790
- US-A1- 2008 166 198
- US-A1- 2011 158 759

## Description

### 1. Field of the Invention

The present invention relates to a positioning assembling structure according to the preamble of claim 1. Such a positioning assembling structure is known from U.S. Patent No. 4,834,597.

### 2. Description of the Prior Arts

In mechanical processing, normally, a tool machine drives a tool to cut a workpiece. The tool may be static or rotatable in operation, such as a milling cutter, a drill bit, a turning tool, a punch bit and so on for cutting or stamping.

U.S. Patent No. 4,834,597, China Patent No. 101155655, China Patent Application No. 107457440, and Taiwan Patent Application No. 201742700 provide some information about conventional positioning assembling structures of machine tools. For example, according to Taiwan Patent Application No. 201742700, an assembling structure of a machine tool mainly comprises a tool holder, a tool, and a fixing part. The tool is fixed on the tool holder via the fixing part. Precisely, the tool holder has a receiving cavity on an end surface thereof. An inner wall of the receiving cavity forms multiple curved surfaces, and radiuses of curvatures of the curved surfaces are the same but centers of the curvatures of the curved surfaces are different. The tool comprises an assembling portion that protrudes toward the tool holder and thus the assembling portion can be engaged in the receiving cavity of the tool holder. In other words, corresponding to the inner wall of the receiving cavity, an outer wall of the assembling portion forms multiple curved surfaces with same radiuses of curvatures but different centers of the curvatures.

Therefore, if the tool is worn after utilized for a long time, the worn part, instead of the whole tool, can be changed so that resources may be saved and the cost may be reduced. However, during assembly of the machine tool which has aforesaid assembling structure, an axis of the tool and an axis of the tool holder may not be aligned to each other because manufacture error or assembly error, such that the quality of the workpiece is diminished. Furthermore, if the axes are oblique with respect to each other to a large degree, the machine tool may be damaged. Therefore, how to line up the axes of the tool of the tool holder is an important task.

The main objective of the present invention is to provide a positioning assembling structure of a center of a machine tool that may assist with assembling the machine tool and thus the axis of the machine tool and the axis of the tool holder may be aligned.

This objective is achieved by a positioning assembling structure according to claim 1 having a tool holder, a tool, and a fixing part. The tool holder comprises a receiving cavity. The receiving cavity is formed at an end surface of the tool holder and comprises a recess and a central positioning hole. The recess is adjacent to an opening of the receiving cavity and includes a plurality of curved surfaces. Radiuses of curvatures of the curved surfaces are the same but centers of the curvatures of the curved surfaces are different. A width of the recess is gradually decreased toward the central positioning hole so that the recess is in a conical shape. An outer wall of the central positioning hole is a cylindrical surface. The central positioning hole is farther from the opening of the receiving cavity than the recess. The tool comprises a cutting portion and an assembling portion. The cutting portion is used for machining a workpiece. The assembling portion is securely mounted on the cutting portion and in the receiving cavity of the tool holder, and comprises a protrusion and a central positioning column. A width of the protrusion is gradually decreased toward the central positioning column so that the protrusion is in a conical shape. The protrusion matches and is received in the recess and includes a plurality of curved surfaces. A number of the curved surfaces of the protrusion is equal to that of the curved surfaces of the recess. Radiuses of curvatures of the curved surfaces of the tool are the same but centers of the curvatures of the curved surfaces of the tool are different. An outer wall of the central positioning hole is a cylindrical surface. The central positioning column matches and is received in the central positioning hole. The central positioning column is farther from the cutting portion than the protrusion. The central positioning column abuts an inner surface of the central positioning hole. The fixing part is connected with the tool holder and the tool.

When the assembling portion is received in the receiving cavity, each one of the curved surfaces of the protrusion abuts a respective one of the curved surfaces of the recess, and a rotating axis of the tool holder and a rotating axis of the tool are arranged in a line.

The receiving cavity of the tool holder has the recess and the central positioning hole that are different in dimensions, and the assembling portion of the tool has the protrusion corresponding to the recess and the central positioning column corresponding to the central positioning hole, so when assembling the tool holder and the tool, the assembling portion of the tool is put into the receiving cavity of the tool holder in two steps. Through the two steps, the rotating axis of the tool and the rotating axis of the tool holder can be aligned to each other, and the tool needs to be rotated to correct an angle for engaging with the tool holder. Therefore, the tool can be securely mounted on the tool holder and is not oblique to the tool holder in any direction, and thereby the tool may not be detached from the tool holder because of vibrations during a machining process.

Other objectives, advantages and novel features of the invention will become more apparent from the following detailed description when taken in conjunction with the accompanying drawings.

### IN THE DRAWINGS

Fig. 1 is an exploded perspective view of a positioning assembling structure of a center of a machine tool in accordance with a first embodiment of the present invention;
Fig. 2 is an exploded sectional view of the positioning assembling structure in Fig. 1;
Fig. 3A is a top perspective view of the positioning assembling structure in one configuration in Fig. 1;
Fig. 3B is a sectional view of the positioning assembling structure in Fig. 3A;
Fig. 4A is a top perspective view of the positioning assembling structure in another configuration in Fig. 1;
Fig. 4B is a sectional view of the positioning assembling structure in Fig. 4A; and
Fig. 5 is a sectional perspective view of a positioning assembling structure of a center of a machine tool in accordance with a second embodiment of the present invention.

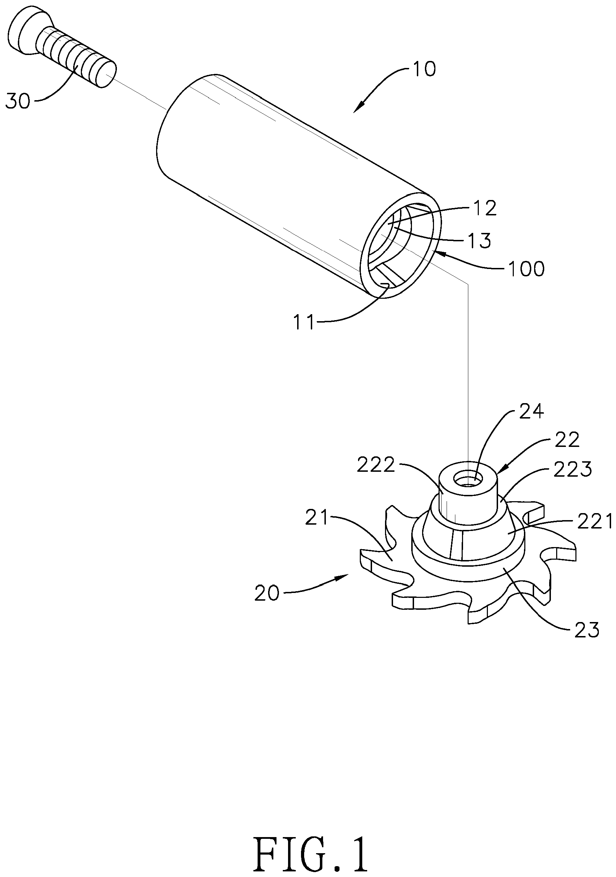

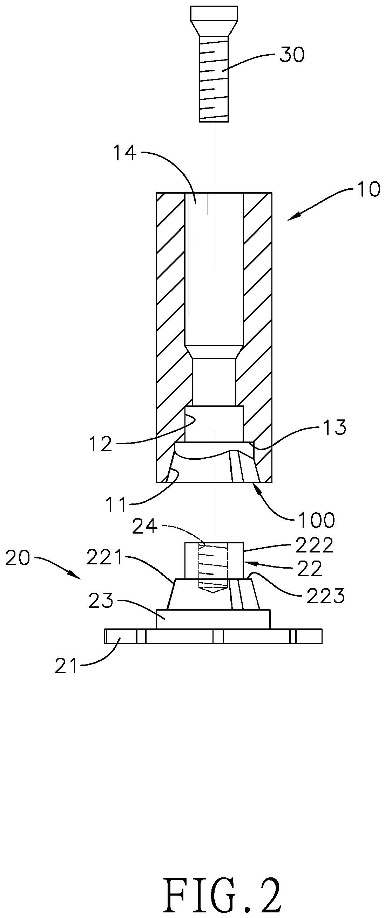

With reference to Figs. 1 and 2, a first embodiment of an assembling structure of a machine tool in accordance with the present invention is provided. The assembling structure comprises a tool holder 10, a tool 20, and a fixing part 30.

The tool holder 10 comprises a receiving cavity 100, and selectively forms a through hole 14. The receiving cavity 100 is formed on an end surface of the tool holder 10 and comprises a recess 11 and a central positioning hole 12, and selectively forms a stepped surface 13. The recess 11 is adjacent to an opening of the receiving cavity 100. Precisely, an inner edge of the end surface of the tool holder 10 contacts the recess 11. The recess 11 includes a plurality of curved surfaces and radiuses of curvatures of the curved surfaces are the same but centers of curvatures of the curved surfaces are located in different positions. Arc lengths of the curved surfaces of the recess 11 are the same thereby enclosing and evenly dividing the recess 11.

In comparison with the recess 11, the central positioning hole 12 is farther away from the opening of the receiving cavity 100. A sectional shape of the central positioning hole 12 is a circle. In this embodiment, a width of the recess 11 is gradually decreased toward the central positioning hole 12, forming the recess 11 in a conical shape, but a width of the central positioning hole 12 is constant so that an inner wall of the central positioning hole 12 forms a cylindrical surface.

The through hole 14 forms through an axis direction of the tool holder 10 at a rotating axis of the tool holder 10, and one end of the through hole 14 communicates with the receiving cavity 100.

The tool 20 comprises a cutting portion 21 and an assembling portion 22, and selectively comprises a connecting portion 23 and a space 24. The cutting portion 21 is capable of machining a work piece. In other words, the cutting portion 21 may be a blade of the tool 20. The assembling portion 22 is securely mounted on the cutting portion 21 and can be received in the receiving cavity 100 of the tool holder 10. The assembling portion 22 does not abut the stepped surface 13. As the assembling portion 22 is received in the receiving cavity 100 of the tool holder 10, the tool 20 can be securely mounted into the tool holder 10 at a correct angle during assembling. When the assembling portion 22 is received in the receiving cavity 100, the rotating axis of the tool holder 10 and a rotating axis of the tool 20 are aligned.

Precisely, the assembling portion 22 comprises a protrusion 221 and a central positioning column 222, and selectively comprises a stepped surface 223. The protrusion 221 matches the recess 11, and the central positioning column 222 matches the central positioning hole 12. Thus, the protrusion 221 also includes a plurality of curved surfaces, and a number of the curved surfaces of the protrusion 221 equals that of the recess 11. Radiuses of curvatures of the curved surfaces of the protrusion 221 are the same but centers of curvatures of the curved surfaces of the protrusion 221 differ, i.e., located at different positions. In comparison with the protrusion 221, the central positioning column 222 is farther away from the cutting portion 21. In this embodiment, corresponding to the cone-shaped-recess 11, a width of the protrusion 221 is also decreased gradually toward the central positioning column 222, forming the protrusion 221 in another conical shape. Similarly, corresponding to the central positioning hole 12, an inner wall of the central positioning column 222 forms a cylindrical surface, too. The stepped surface 223 of the assembling portion 22 is between the protrusion 221 and the central positioning column 222, and faces to the stepped surface 13 of the tool holder 10. The stepped surface 13 is between the recess 11 and the central positioning hole 12. A thickness of the protrusion 221 in the axis direction is less than a depth of the recess 11 in the axis direction. Therefore, after assembly, the stepped surface 13 of the tool holder 10 and the stepped surface 223 of the tool 20 face to each other, and a gap is formed between the stepped surface 13 of the tool holder 10 and the stepped surface 223 of the tool 20. In other words, the whole protrusion 221 can be received in the recess 11 and thus the tool 20 can be engaged on the tool holder 10 thoroughly.

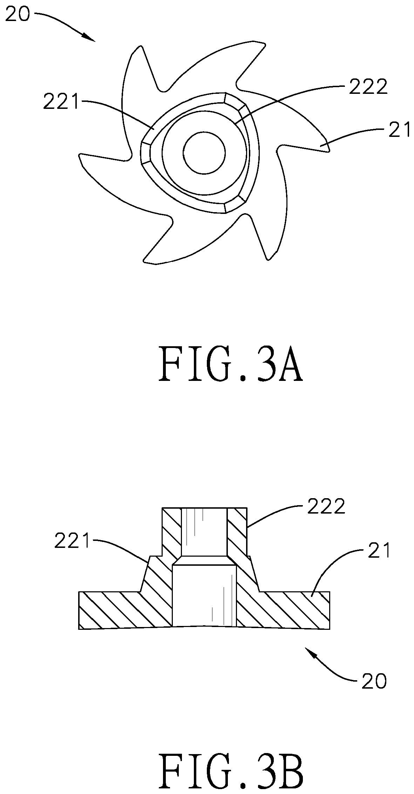

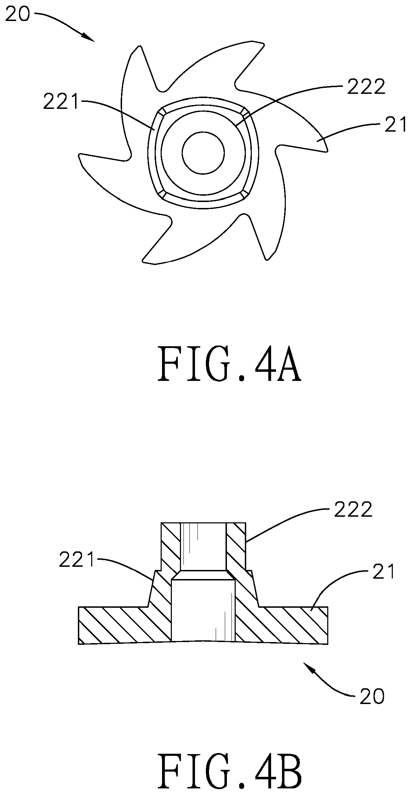

Please also refer to Figs. 3A and 3B, which show a different configuration of the tool 20 in the first embodiment of the present invention. Precisely, the protrusion 221 may comprise three curved surfaces, and each curved surface extends 120 degrees with respect to the rotating axis of the tool 20. The adjacent two curved surfaces are connected by a round angle. The recess of the tool holder (not shown in the figures) corresponds to the protrusion 221 in shape, therefore matching the protrusion 221. Then please refer to Figs. 4A and 4B, which show another configuration of the tool 20 in the first embodiment of the present invention. The protrusion 221 may comprise four curved surfaces so that each curved surface extends 90 degrees with respect to the rotating axis of the tool 20. The recess of the tool holder (not shown in the figures) corresponds to the protrusion 221 in shape, therefore matching the protrusion 221. However, the shapes of the protrusion 221 and the recess are not limited thereto.

Then please refer to Figs. 1 and 2 again. The connecting portion 23 is located between the cutting portion 21 and the assembling portion 22, and the assembling portion 22 is securely mounted on the cutting portion 21 via the connecting portion 23. In this embodiment, the cutting portion 21, the assembling portion 22, and the connecting portion 23 are formed integrally. A shape and dimensions of a sectional area of the connecting portion 23 are identical to those of the tool holder 10. Therefore, after assembled, the surface of the connecting portion 23 abutting the tool holder 10 is the end surface of the tool holder 10 that forms the receiving cavity 100, and an outer wall surface of the connecting portion 23 and an outer wall surface of the tool holder 10 are connected to each other and thereby form a cylindrical surface. With the connecting portion 23, the cutting portion 21 may be separated from the tool holder 10, which reduces the chance of damaging the tool holder 10 during operation.

The space 24 is concaved in a surface of the tool 20, and said surface faces to the tool holder 10. In other words, the space 24 is formed in the assembling portion 22. Precisely, the space 24 is concaved along the rotating axis of the tool 20, so the space 24 faces to and communicates with the through hole 14 of the tool holder 10. An inner wall of the space 24 may form threads.

The fixing part 30 is capable of connecting the tool holder 10 and the tool 20. In this embodiment, the fixing part 30 is put into the through hole 14 of the tool holder 10 from an end of the tool holder 10, and said end is farther from the tool 20, so the fixing part 30 can be screwed on threads on an inner wall of the through hole 14. A portion of the fixing part 30 extends into the receiving cavity 100 of the tool holder 10, so that the fixing part 30 can be screwed on the thread on the inner wall of the space 24. Therefore, the tool holder 10 and the tool 20 are connected to and fixed on each other.

With aforesaid structure, when the tool 20 is fixed on the tool holder 10, the assembling portion 22 of the tool 20 is put into the receiving cavity 100 of the tool holder 10. Precisely, when the assembling portion 22 is put into the receiving cavity 100, the central positioning column 222 of the assembling portion 22 may be moved into the central positioning hole 12 of the receiving cavity 100. Because the central positioning hole 12 is farther from the opening of the receiving cavity 100, when the central positioning column 222 is moved into and abuts the central positioning hole 12, the rotating axis of the tool 20 can be aligned to the rotating axis of the tool holder 10, so that the two rotating center axes are arranged in one line. In other words, through the central positioning column 222 abutting the central positioning hole 12, the rotating axis of the tool 20 may be prevented from being oblique to the rotating center axis of the tool holder 10. Besides, sectional areas of both the central positioning column 222 and central positioning hole 12 are circles, so the tool 20 can be put into the tool holder 10 at any angle.

Then, after the assembling portion 22 is further moved into the receiving cavity 100, the protrusion 221 also can be moved into and abuts the recess 11. Because the sectional areas of both the protrusion 221 and the recess 11 are not circular, and the thickness of the protrusion 221 is lesser than the depth of the recess 11 in the axis direction, the tool 20 needs to be rotated with respect to the rotating axis for moving into the recess 11, which assists with securely mounting the tool 20 on the tool holder 10 at a correct angle. After the above two steps, the assembling portion 22 is put into the receiving cavity 100, and thereby the tool 20 may not be oblique to the tool holder 10 and at a correct angle. In addition, with the width of the recess 11 and protrusion 221 are gradually decreased in the axis direction, when the protrusion 221 is moved into and abuts the recess 11, even though the tool 20 is moved at a wrong angle with respect to the axis direction, the protrusion 221 still can be moved along the recess 11 with the gradually decreased width. Therefore, the protrusion 221 can be rotated along the recess 11 to the correct angle and thereby moved into the recess 11, so the assembly process is simplified.

Finally, the tool 20 is fixed on the tool holder 10 via the fixing part 30.

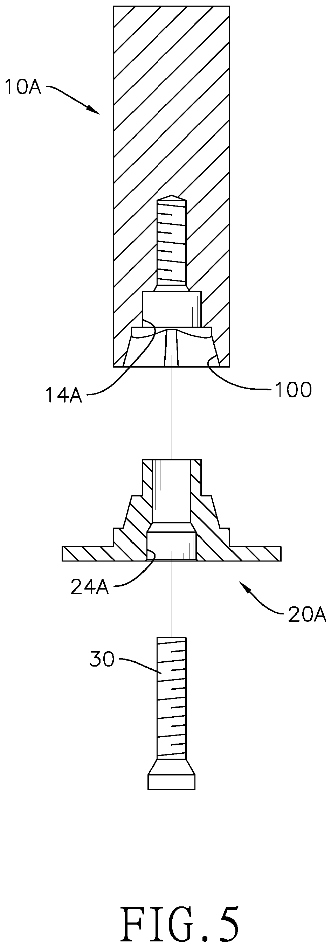

Then please refer to Fig. 5. In a second embodiment of the present invention, technical features are similar to those of the first embodiment, but one difference is the tool holder 10A does not comprise a through hole but comprises a space 14A instead, and the tool 20A does not comprise a space but comprises a through hole 24A instead. In other words, in comparison to the first embodiment, the through hole and the space are arranged vice versa in their relations with the tool holder and the tool to be the second embodiment. Precisely, the space 14A is concaved in the tool holder 10A and in the receiving cavity 100, formed along a center of the tool holder 10A, and extended toward one side of the tool 20A. The through hole 24A is formed through a rotating axis of the tool 20A, and an inner wall of the through hole 24A may form threads. Therefore, the tool 20A is connected to and fixed on the tool holder 10A through the fixing part 30 screwed on both the tool holder 10A and the tool 20A. Precisely, the fixing part 30 is put into the through hole 24A from an end of the tool 20A, said end is farther from the tool holder 10A, and then a portion of the fixing part 30 is moved into the space 14A of the tool holder 10A.

The receiving cavity 100 of the tool holder 10 has the recess 11 and the central positioning hole 12 that are different in dimensions, and the assembling portion 22 of the tool 20 has the protrusion 221 corresponding to the recess 11 and the central positioning column 222 corresponding to the central positioning hole 12. When assembling the tool holder 10 and the tool 20, the assembling portion 22 of the tool 20 is put into the receiving cavity 100 of the tool holder 10 in two steps. Through the two steps, the rotating axis of the tool 20 and the rotating axis of the tool holder 10 can be aligned to each other, and the tool 20 needs to be rotated to correct the angle for engaging with the tool holder 10. Therefore, the tool 20 can be securely mounted on the tool holder 10 and is not oblique to the tool holder 10 in any direction, and thereby the tool 20 may not be detached from the tool holder 20 because of vibrations during a machining process.

## Claims

1. A positioning assembling structure of a center of a machine tool, the positioning assembling structure comprising:
a tool holder (10) comprising a receiving cavity (100); the receiving cavity (100) formed at an end surface of the tool holder (10) and comprising:
a recess (11) adjacent to an opening of the receiving cavity (100); and
a tool (20) comprising:
a cutting portion (21) for machining a workpiece; and
an assembling portion (22) securely mounted on the cutting portion (21) and in the receiving cavity (100) of the tool holder (10), and comprising:
a protrusion (221) matching and received in the recess (11); and
a fixing part (30) connected with the tool holder (10) and the tool (20);
the positioning assembling structure of a center of a machine tool **characterized in that**:
the tool holder (10) further comprises:
a central positioning hole (12); wherein an outer wall of the central positioning hole (12) is a cylindrical surface; the central positioning hole (12) is farther from the opening of the receiving cavity (100) than the recess (11);
a width of the recess (11) is gradually decreased toward the central positioning hole (12) so that the recess (11) is in a conical shape; the recess (11) including:
a plurality of curved surfaces, radiuses of curvatures of the curved surfaces being the same but centers of the curvatures of the curved surfaces being different;
and **in that** the assembling portion (22) further comprises:
a central positioning column (222); the central positioning column (222) matching and received in the central positioning hole (12); the central positioning column (222) being farther from the cutting portion (21) than the protrusion (221);
a width of the protrusion (221) gradually decreased toward the central positioning column (222) so that the protrusion (211) is in a conical shape; the protrusion (221) including:
a plurality of curved surfaces, a number of the curved surfaces of the protrusion (221) being equal to that of the curved surfaces of the recess (11); radiuses of curvatures of the curved surfaces of the tool (20) being the same but centers of the curvatures of the curved surfaces of the tool (20) being different; and
wherein when the assembling portion (22) is received in the receiving cavity (100), each one of the curved surfaces of the protrusion (221) abuts a respective one of the curved surfaces of the recess (11), the central positioning column (222) abutting an inner surface of the central positioning hole (12), and a rotating axis of the tool holder (10) and a rotating axis of the tool (20) are arranged in a line.

2. The positioning assembling structure of a center of a machine tool as claimed in claim 1, wherein:
the receiving cavity (100) of the tool holder (10) further comprises:
a stepped surface (13) formed between the recess (11) and the central positioning hole (12);
the assembling portion (22) of the tool (20) also comprises:
a stepped surface (223) formed between the protrusion (221) and the central positioning column (222); and
a thickness of the protrusion (221) in a direction parallel to the rotating axis of the tool (20) is lesser than a depth of the recess (11) in said direction; the stepped surface (13) of the tool holder (10) faces to the stepped surface (223) of the tool (20), and a gap is formed between the stepped surface (13) of the tool holder (10) and the stepped surface (223) of the tool (20).

3. The positioning assembling structure of a center of a machine tool as claimed in claim 1 or 2, wherein the tool (20) further comprises:
a connecting portion (23) formed between the cutting portion (21) and the assembling portion (22) and thereby the assembling portion (22) securely mounted on the cutting portion (21) via the connecting portion (23); sectional dimensions and a sectional shape of the connecting portion (23) being identical to those of the tool holder (10).

4. The positioning assembling structure of a center of a machine tool as claimed in any one of claims 1 to 3, wherein:
the tool holder (10) further comprises
a through hole (14) formed through the rotating axis of the tool holder (10);
the tool (20) further comprises
a space (24) concaved in a surface of the tool (20), and facing and communicating to the through hole (14) of the tool holder (10); said surface of the tool (20) facing to the tool holder (10); and
the fixing part (30) is mounted through and screwed in the through hole (14) and the space (24).

5. The positioning assembling structure of a center of a machine tool as claimed in any one of claims 1 to 3, wherein:
the tool holder (10A) further comprises:
a space (14A) concaved in a surface of the tool holder (10A), said surface of the tool holder (10A) facing to the tool (20A);
the tool (20A) further comprises:
a through hole (24A) formed through the rotating axis of the tool (20A), and facing and communicating to the space (24A) of the tool holder (10A); and
the fixing part (30) is mounted through and screwed in the through hole (24A) and the space (14A).

## Patentansprüche

1. Positionierungsmontagestruktur eines Zentrums einer Werkzeugmaschine, wobei die Positionierungsmontagestruktur umfasst:
einen Werkzeughalter (10), umfassend einen Aufnahmehohlraum (100); wobei der Aufnahmehohlraum (100) an einer Endfläche des Werkzeughalters (10) ausgebildet ist und umfasst:
eine Aussparung (11), die benachbart zu einer Öffnung des Aufnahmehohlraums (100) liegt; und
ein Werkzeug (20), umfassend:
einen Schneidabschnitt (21) zum Bearbeiten eines Werkstücks; und
einen Montageabschnitt (22), der sicher an dem Schneidabschnitt (21) und in dem Aufnahmehohlraum (100) des Werkzeughalters (10) angebracht ist und umfasst:
einen Vorsprung (221), der zu der Aussparung (11) passt und in dieser aufgenommen ist; und
ein Befestigungsteil (30), der mit dem Werkzeughalter (10) und dem Werkzeug (20) verbunden ist;
die Positionierungsmontagestruktur eines Zentrums einer Werkzeugmaschine, **dadurch gekennzeichnet, dass**:
der Werkzeughalter (10) ferner umfasst:
ein zentrales Positionierungsloch (12); wobei eine Außenwand des zentralen Positionierungslochs (12) eine zylindrische Fläche ist; das zentrale Positionierungsloch (12) weiter von der Öffnung des Aufnahmehohlraums (100) entfernt ist als die Aussparung (11);
eine Breite der Aussparung (11) nimmt allmählich in Richtung des zentralen Positionierungslochs (12) ab, so dass die Aussparung (11) eine konische Form aufweist; wobei die Aussparung (11) beinhaltet: eine Vielzahl von gekrümmten Flächen, wobei Krümmungsradien der gekrümmten Flächen gleich sind, die Zentren der Krümmungen der gekrümmten Flächen jedoch unterschiedlich sind;
und dass der Montageabschnitt (22) ferner umfasst:
eine zentrale Positionierungssäule (222); wobei die zentrale Positionierungssäule (222) zu dem zentralen Positionierungsloch (12) passt und in diesem aufgenommen ist; wobei die zentrale Positionierungssäule (222) weiter von dem Schneidabschnitt (21) entfernt ist als der Vorsprung (221); wobei eine Breite des Vorsprungs (221) allmählich in Richtung der zentralen Positionierungssäule (222) abnimmt, so dass der Vorsprung (211) in einer konischen Form vorliegt; wobei der Vorsprung (221) beinhaltet:
eine Vielzahl von gekrümmten Flächen, wobei eine Anzahl der gekrümmten Flächen des Vorsprungs (221) gleich der der gekrümmten Flächen der Aussparung (11) ist; wobei Krümmungsradien der gekrümmten Flächen des Werkzeugs (20) gleich sind, Zentren der Krümmungen der gekrümmten Flächen des Werkzeugs (20) jedoch unterschiedlich sind; und
wobei, wenn der Montageabschnitt (22) in dem Aufnahmehohlraum (100) aufgenommen ist, eine jede der gekrümmten Flächen des Vorsprungs (221) an einer jeweiligen der gekrümmten Flächen der Aussparung (11) anliegt, wobei die zentrale Positionierungssäule (222) an einer Innenfläche des zentralen Positionierungslochs (12) anliegt, und eine Drehachse des Werkzeughalters (10) und eine Drehachse des Werkzeugs (20) in einer Linie angeordnet sind.

2. Positionierungsmontagestruktur eines Zentrums einer Werkzeugmaschine nach Anspruch 1, wobei:
der Aufnahmehohlraum (100) des Werkzeughalters (10) ferner umfasst:
eine abgestufte Fläche (13), die zwischen der Aussparung (11) und dem zentralen Positionierungsloch (12) ausgebildet ist;
der Montageabschnitt (22) des Werkzeugs (20) auch umfasst:
eine abgestufte Fläche (223), die zwischen dem Vorsprung (221) und der zentralen Positionierungssäule (222) ausgebildet ist; und
eine Dicke des Vorsprungs (221) in einer Richtung parallel zur Drehachse des Werkzeugs (20) geringer als eine Tiefe der Aussparung (11) in dieser Richtung ist; die abgestufte Fläche (13) des Werkzeughalters (10) der abgestuften Fläche (223) des Werkzeugs (20) zugewandt ist und ein Spalt zwischen der abgestuften Fläche (13) des Werkzeughalters (10) und der abgestuften Fläche (223) des Werkzeugs (20) ausgebildet ist.

3. Positionierungsmontagestruktur eines Zentrums einer Werkzeugmaschine nach Anspruch 1 oder 2, wobei das Werkzeug (20) ferner umfasst:
einen Verbindungsabschnitt (23), der zwischen dem Schneidabschnitt (21) und dem Montageabschnitt (22) ausgebildet ist, und dadurch den Montageabschnitt (22), der über den Verbindungsabschnitt (23) sicher an dem Schneidabschnitt (21) angebracht ist; wobei Querschnittsabmessungen und eine Querschnittsform des Verbindungsabschnitts (23) identisch mit denen des Werkzeughalters (10) sind.

4. Positionierungsmontagestruktur eines Zentrums einer Werkzeugmaschine nach einem der Ansprüche 1 bis 3, wobei:
der Werkzeughalter (10) ferner umfasst
ein Durchgangsloch (14), das durch die Drehachse des Werkzeughalters (10) ausgebildet ist; das Werkzeug (20) umfasst ferner
einen Raum (24), der an einer Fläche des Werkzeugs (20) konkav ist und dem Durchgangsloch (14) des Werkzeughalters (10) zugewandt ist und mit diesem in Kommunikation steht; wobei die Fläche des Werkzeugs (20) dem Werkzeughalter (10) zugewandt ist; und
der Befestigungsteil (30) ist durch das Durchgangsloch (14) und den Raum (24) angebracht und darin verschraubt.

5. Positionierungsmontagestruktur eines Zentrums einer Werkzeugmaschine nach einem der Ansprüche 1 bis 3, wobei:
der Werkzeughalter (10A) ferner umfasst:
einen Raum (14A), der in einer Fläche des Werkzeughalters (10A) konkav ausgebildet ist, wobei die Fläche des Werkzeughalters (10A) dem Werkzeug (20A) zugewandt ist;
das Werkzeug (20A) ferner umfasst:
ein Durchgangsloch (24A), das durch die Drehachse des Werkzeugs (20A) ausgebildet ist und dem Raum (24A) des Werkzeughalters (10A) zugewandt ist und mit diesem in Kommunikation steht; und
der Befestigungsteil (30) ist durch das Durchgangsloch (24A) und den Raum (14A) angebracht und darin verschraubt.

## Revendications

1. Structure d'assemblage de positionnement d'un centre d'une machine-outil, la structure d'assemblage de positionnement comprenant :
un porte-outil (10) comprenant une cavité de réception (100) ; la cavité de réception (100) formée au niveau d'une surface d'extrémité du porte-outil (10) et comprenant :
un évidement (11) adjacent à une ouverture de la cavité de réception (100) ; et
un outil (20) comprenant
une partie de coupe (21) pour l'usinage d'une pièce ; et
une partie d'assemblage (22) solidement montée sur la partie de coupe (21) et dans la cavité de réception (100) du porte-outil (10), et comprenant :
une saillie (221) adaptée et reçue dans l'évidement (11) ; et
une pièce de fixation (30) reliée au porte-outil (10) et à l'outil (20) ;
la structure d'assemblage de positionnement d'un centre d'une machine-outil **caractérisée en ce que** :
le porte-outil (10) comprend en outre :
un trou de positionnement central (12) ; dans lequel une paroi extérieure du trou de positionnement central (12) est une surface cylindrique ; le trou de positionnement central (12) est plus éloigné de l'ouverture de la cavité de réception (100) que l'évidement (11) ;
la largeur de l'évidement (11) diminue progressivement en direction du trou de positionnement central (12) de sorte que l'évidement (11) ait une forme conique ; l'évidement (11) comprenant : une pluralité de surfaces incurvées, les rayons de courbures des surfaces incurvées étant identiques mais les centres des courbures des surfaces incurvées étant différents ;
et **en ce que** la partie d'assemblage (22) comprend en outre :
une colonne de positionnement central (222) ; la colonne de positionnement central (222) correspondant et étant reçue dans le trou de positionnement central (12) ; la colonne de positionnement central (222) étant plus éloignée de la partie de coupe (21) que la saillie (221) ; une largeur de la saillie (221) diminuant progressivement vers la colonne de positionnement central (222) de sorte que la saillie (211) ait une forme conique ; la saillie (221) comprenant :
une pluralité de surfaces incurvées, un nombre de surfaces incurvées de la saillie (221) étant égal à celui des surfaces incurvées de l'évidement (11) ; les rayons de courbures des surfaces incurvées de l'outil (20) étant les mêmes mais les centres des courbures des surfaces incurvées de l'outil (20) étant différents ; et
dans laquelle lorsque la partie d'assemblage (22) est reçue dans la cavité de réception (100), chacune des surfaces incurvées de la saillie (221) est en contact avec une surface incurvée respective de l'évidement (11), la colonne de positionnement central (222) est en contact avec une surface intérieure du trou de positionnement central (12), et un axe de rotation du porte-outil (10) et un axe de rotation de l'outil (20) sont disposés dans une ligne.

2. Structure d'assemblage de positionnement d'un centre d'une machine-outil selon la revendication 1, dans laquelle :
la cavité de réception (100) du porte-outil (10) comprend en outre :
une surface étagée (13) formée entre l'évidement (11) et le trou de positionnement central (12) ;
la partie d'assemblage (22) de l'outil (20) comprend également :
une surface étagée (223) formée entre la saillie (221) et la colonne de positionnement central (222) ; et
l'épaisseur de la saillie (221) dans une direction parallèle à l'axe de rotation de l'outil (20) est inférieure à la profondeur de l'évidement (11) dans ladite direction ; la surface étagée (13) du porte-outil (10) fait face à la surface étagée (223) de l'outil (20), et un espace est formé entre la surface étagée (13) du porte-outil (10) et la surface étagée (223) de l'outil (20).

3. Structure d'assemblage de positionnement d'un centre d'une machine-outil selon la revendication 1 ou 2, dans laquelle l'outil (20) comprend en outre :
une partie de connexion (23) formée entre la partie de coupe (21) et la partie d'assemblage (22) et, de ce fait, la partie d'assemblage (22) est solidement montée sur la partie de coupe (21) par l'intermédiaire de la partie de connexion (23) ; les dimensions en coupe et une forme en coupe de la partie de connexion (23) sont identiques à celles du porte-outil (10).

4. Structure d'assemblage de positionnement d'un centre d'une machine-outil selon l'une quelconque des revendications 1 à 3, dans laquelle :
le porte-outil (10) comprend en outre
un trou traversant (14) formé à travers l'axe de rotation du porte-outil (10) ; l'outil (20) comprend en outre
un espace (24) concave sur une surface de l'outil (20), faisant face et communiquant avec le trou traversant (14) du porte-outil (10) ; ladite surface de l'outil (20) faisant face au porte-outil (10) ; et
la pièce de fixation (30) est montée et vissée dans le trou traversant (14) et l'espace (24).

5. Structure d'assemblage de positionnement d'un centre d'une machine-outil selon l'une quelconque des revendications 1 à 3, dans laquelle :
le porte-outil (10A) comprend en outre :
un espace (14A) concave dans une surface du porte-outil (10A), ladite surface du porte-outil (10A) faisant face à l'outil (20A) ;
l'outil (20A) comprend en outre :
un trou traversant (24A) formé à travers l'axe de rotation de l'outil (20A), et faisant face et communiquant avec l'espace (24A) du porte-outil (10A) ; et
la pièce de fixation (30) est montée à travers et vissée dans le trou traversant (24A) et l'espace (14A).
